# EUROPÄISCHE PATENTSCHRIFT

(11) **EP 2 748 826 B1**
(45) Veröffentlichungstag und Bekanntmachung des Hinweises auf die Patenterteilung: **06.03.2019**
(21) Anmeldenummer: 12748482.2
(22) Anmeldetag: 20.08.2012
(51) Int. Cl.: B82Y 30/00, B82Y 40/00, C09D 11/52, H01B 1/24, C01B 32/158, C01B 32/174, C01B 32/182, C01B 32/194

(54) **KOHLENSTOFFNANORÖHREN UND GRAPHENPLÄTTCHEN UMFASSENDE DISPERSION**
DISPERSIONS CONTAINING CARBON NANOTUBES AND GRAPHENE PLATELETS
NANOTUBES DE CARBONE ET DISPERSIONS CONTENANT DES PLAQUETTES GRAPHIQUES

(30) Priorität: 22.08.2011 EP 11178301
(43) Veröffentlichungstag der Anmeldung: 02.07.2014
(73) Patentinhaber: Future Carbon GmbH, 95448 Bayreuth (DE)
(72) Erfinder: RUDHARDT, Daniel, 50827 Köln (DE); BÜSGEN, Thomas, 51063 Köln (DE); EIDEN, Stefanie, 51371 Leverkusen (DE); LANDEN, Diana Dimowa, 51377 Leverkusen (DE); BEHNKEN, Gesa, 50676 Köln (DE)
(74) Vertreter: Müller, Christian Stefan Gerd
(86) Internationale Anmeldenummer: PCT/EP2012/066195
(87) Internationale Veröffentlichungsnummer: WO 2013/026827

(56) Entgegenhaltungen:
- DONGYU CAI ET AL: "Highly Conductive Carbon-Nanotube/Graphite-Oxide Hybrid Films", ADVANCED MATERIALS, Bd. 20, Nr. 9, 5. Mai 2008 (2008-05-05), Seiten 1706-1709, XP055023529, ISSN: 0935-9648, DOI: 10.1002/adma.200702602
- UMAR KHAN ET AL: "The preparation of hybrid films of carbon nanotubes and nano-graphite/graphene with excellent mechanical and electrical properties", CARBON, Bd. 48, Nr. 10, 1. August 2010 (2010-08-01), Seiten 2825-2830, XP055023462, ISSN: 0008-6223, DOI: 10.1016/j.carbon.2010.04.014
- VINCENT C. TUNG ET AL: "Low-Temperature Solution Processing of Graphene-Carbon Nanotube Hybrid Materials for High-Performance Transparent Conductors", NANO LETTERS, Bd. 9, Nr. 5, 13. Mai 2009 (2009-05-13), Seiten 1949-1955, XP055023530, ISSN: 1530-6984, DOI: 10.1021/nl9001525
- XIANGJUN LU ET AL: "A flexible graphene/multiwalled carbon nanotube film as a high performance electrode material for supercapacitors", ELECTROCHIMICA ACTA, Bd. 56, Nr. 14, 1. Mai 2011 (2011-05-01), Seiten 5115-5121, XP055023463, ISSN: 0013-4686, DOI: 10.1016/j.electacta.2011.03.066
- YUANQING LI ET AL: "Synergistic effect of hybrid carbon nantube-graphene oxide as a nanofiller in enhancing the mechanical properties of PVA composites", JOURNAL OF MATERIALS CHEMISTRY, Bd. 21, Nr. 29, 1. Januar 2011 (2011-01-01), Seite 10844, XP055023467, ISSN: 0959-9428, DOI: 10.1039/c1jm11359c

## Beschreibung

Die vorliegende Erfindung betrifft eine Kohlenstoffnanoröhren und Graphenplättchen umfassende Dispersion mit einem bestimmten Massenverhältnis dieser Komponenten. Sie betrifft weiterhin ein Verfahren zur Herstellung einer solchen Dispersion, deren Verwendung als Drucktinte zur Herstellung von elektrisch leitfähigen Filmen und einen hierauf basierenden elektrisch leitfähigen Film.

Gedruckte Elektroniken finden in zunehmendem Maße Verwendung in vielseitigen Anwendungen wie tragbarer Elektronik, Beschilderung, Beleuchtung, Produktidentifizierung, flexible Elektroniken (die zum Beispiel gerollt oder gedehnt werden können), Photovoltaik, medizinischen Apparaten, Antennen (insbesondere RFID-Antennen), Displays, Sensoren, Dünnfilmbatterien, Elektroden und vielen anderen. Gedruckte Elektroniken besitzen eine Vielfalt von Vorteilen gegenüber konventionellen Elektroniken. Das Drucken von leitfähigen Strukturen kann schneller als substraktive Verfahren (wie Ätzen) sein, weniger Abfall erzeugen und weniger gefährliche Chemikalien als in konventionellen Verfahren involvieren. Die resultierende Elektronik kann einfacher in flexiblen Anwendungen verwendet werden, wie flexible Displays, die gerollt, verdrillt, verbogen oder anders gedehnt werden können.

Gedruckte Elektroniken werden gewöhnlich durch Druck der Leiterbahnen oder sonstigen Bestandteile der elektrischen Stromkreise auf einem Substrat mit einer elektrisch leitenden, metallischen Tinte gemacht. Die Tinten enthalten gewöhnlich Silberteilchen und gelegentlich Kupferteilchen, sonstige Metallteilchen und/oder leitende Polymere. Jedoch sind leitende Polymere alleine im Allgemeinen nicht ausreichend elektrisch leitend. Außerdem sind die resultierenden gedruckten metallischen Stromkreise in flexiblen Anwendungen, in denen sie durch Verbiegen und/oder Strecken regelmäßig mechanisch gedehnt werden, nur unzulänglich elektrisch leitend.

Die bedruckten Substrate müssen folglich häufig bei erhöhten Temperaturen gesintert werden, um die leitenden Metallteilchen miteinander zu verbinden, sodass die gewünschte elektrische Leitfähigkeit erzielt wird. Die benötigten Temperaturen für diese Sinterverfahren begrenzen oftmals die Auswahl an Substraten für die Herstellung der Elektronik. Während kostengünstige Materialien wie Papier, Polyolefine (zum Beispiel, Polypropylen) und dergleichen als Substrate für gedruckte Elektronik in zahlreichen Anwendungen wünschenswert wären, sind die oftmals erforderlichen Sintertemperaturen zu hoch, um derartige Materialien verwenden zu können. Außerdem ist Silber teuer, während unedle Metalle bei Aussetzung an Luft Oxide bilden können, die das Material für die entsprechende Anwendung unzulänglich leitend machen.

Zusätzlich kann die Verwendung von metallbasierten Tinten zu einem erhöhten Gewicht des resultierenden Bauteils beitragen und durch das zuvor erwähnte Sinterverfahren kann dem Herstellungsverfahren eine oder mehrer zusätzliche Schritte, Zeit und Komplexität hinzufügen. Es wäre folglich wünschenswert, gedruckte elektronische Bauteile mit Tinten zu erzielen, die nicht teure Edelmetalle enthalten.

Vor diesem Hintergrund offenbaren US 2007/0284557 A1 und US 2009/0017211 A1 einen transparenten und leitfähigen Film, welcher ein Netzwerk von Graphenplättchen umfasst. Der Film kann weiterhin ein ineinandergreifendes Netzwerk von anderen Nanostrukturen, ein Polymer und/oder ein Funktionalisierungsmittel enthalten. Diese Patentanmeldung beschreibt ferner ein Verfahren zur Herstellung eines solchen Films, beispielsweise durch Bereitstellen der Graphenplättchen in einer Lösung und Entfernen des Lösungsmittels. Diese Patentanmeldungen offenbaren in einem Beispiel auch Graphen-CNT-Komposite als Bestandteile des Films, ohne jedoch nähere Angaben über die relativen Anteile von Graphen und CNT zu machen.

US 2007/0158610 A1 betrifft ein Verfahren zur Herstellung einer stabilen Suspension von Kohlenstoffnanopartikeln in einer hydrophilen Wärmeübertragungsflüssigkeit zur Verbesserung der Wärmeleitfähigkeiten und anderer Eigenschaften wie dem Gefrierpunkt eines Frostschutzmittels. Das Verfahren beinhaltet den Schritt des Dispergierens von Kohlenstoffnanopartikeln direkt in eine Mischung einer Wärmeübertragungsflüssigkeit und anderer Additive in der Gegenwart von Tensiden unter zeitweiliger Ultraschalleinwirkung.

US 2010/0000441 A1 beschäftigt sich mit einer graphenplättchenbasierten leitfähigen Tinte, umfassend (a) Graphen-Nanoplättchen (vorzugsweise nicht-oxidiertes oder ursprüngliches Graphen) und (b) ein flüssiges Medium, in welchem die Graphen-Nanoplättchen dispergiert sind, wobei die Graphen-Nanoplättchen wenigstens 0,001 Volumen-%, bezogen auf das Gesamtvolumen der Tinte, einnehmen. Die Tinte kann auch ein Bindemittel oder Matrixmaterial und/oder ein Tensid enthalten. Weiterhin kann die Tinte andere Füllstoffe wie Kohlenstoffnanoröhren, Kohlenstoffnanofasern, Metallnanopartikel, Ruß, leitfähige organische Verbindungen, etc. enthalten. Die Graphenplättchen weisen vorzugsweise eine durchschnittliche Dicke von nicht mehr als 10 nm und vorzugsweise von nicht mehr als 1 nm auf. Die genannten Tinten können verdruckt werden, um elektrisch oder thermisch leitfähige Komponenten zu bilden. In einem Beispiel wird eine Tinte erwähnt, welche 5% Kohlenstoffnanoröhren und 1% Graphen-Nanoplättchen enthält.

Die vorliegende Erfindung hat sich die Aufgabe gestellt, die im Stand der Technik bekannten metallpartikelfreien leitfähigen Tinten weiter zu verbessern. Insbesondere sollten die elektrischen Leitfähigkeiten der hiermit erhaltenen Filme erhöht werden.

Erfindungsgemäß wird diese Aufgabe gelöst durch eine Dispersion, umfassend Kohlenstoffnanoröhren und Graphenplättchen, wobei das Massenverhältnis von Kohlenstoffnanoröhren zu Graphenplättchen in einem Bereich von ≥ 5:95 bis ≤ 75:25 liegt, die Kohlenstoffnanoröhren und Graphenplättchen unfunktionalisiert sind und die Dispersion einen Wassergehalt in einem Bereich von >= 50 bis <= 99,5 Gew.-% aufweist.

Überraschenderweise wurde gefunden, dass getrocknete Filme aus den erfindungsgemäßen, als Tinte genutzten Dispersionen einen synergistischen Effekt der elektrischen Leitfähigkeit zeigen. Die spezifische Leitfähigkeit liegt um ein Mehrfaches höher als bei Filmen, die ausschließlich mit Kohlenstoffnanoröhren oder Graphenplättchen gebildet werden.

Ohne auf eine Theorie festgelegt zu sein wird angenommen, dass Kohlenstoffnanoröhren in der Regel leicht gebogen vorliegen und eher Netzwerke als eine dichteste Packung ausbilden. Graphene wiederum nehmen zwar aufgrund ihrer Plättchen-Struktur eher eine geordnete Anordnung ein, aber der Kontakt zwischen den Plättchen ist gering. Durch die erfindungsgemäßen Verhältnisse zwischen Kohlenstoffnanoröhrchen und Graphenplättchen werden nun diese Nachteile kompensiert und es kommt zu einer Erhöhung der elektrischen Leitfähigkeit. Wie später eingehender beschrieben werden wird, kommt es in einem bestimmten Massenverhältnis von Kohlenstoffnanoröhren zu Graphenplättchen zu einem Maximum der spezifischen Leitfähigkeit in getrockneten Filmen aus erfindungsgemäßen Dispersionen.

Kohlenstoffnanoröhren (carbon nanotubes, CNTs) im Sinne der Erfindung sind alle einwandigen oder mehrwandigen Kohlenstoffnanoröhren vom Zylinder-Typ (zum Beispiel in Patent Iijima US 5,747,161; Tennant WO 86/ 03455), Scroll-Typ, Multiscroll-Typ, Cup-stacked Typ aus einseitig geschlossenen oder beidseitig offenen, konischen Bechern bestehend (zum Beispiel in Patent Geus EP198,558 und Endo US 7018601B2), oder mit zwiebelartiger Struktur. Bevorzugt sind mehrwandige Kohlenstoffnanoröhren vom Zylinder-Typ, Scroll-Typ, Multiscroll-Typ und Cup-stacked Typ oder deren Mischungen einzusetzen. Günstig ist es, wenn die Kohlenstoffnanoröhren ein Verhältnis von Länge zu Außendurchmesser von ≥ 5, bevorzugt ≥ 100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffnanoröhren werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Graphen ist die Bezeichnung für eine Modifikation des Kohlenstoffs mit zweidimensionaler Struktur, in der jedes Kohlenstoffatom von drei weiteren umgeben ist, so dass sich ein bienenwabenförmiges Muster ausbildet. Insofern ist Graphen als eine einzelne Graphitlage anzusehen. Im Rahmen der vorliegenden Erfindung schließt der Begriff "Graphen" jedoch auch dünne Stapel von einzelnen Graphitlagen ein, die sich aufgrund ihrer geringen Dicke in ihren physikalischen Eigenschaften weiterhin wesentlich von Graphit-Volumenmaterial unterscheiden. Weitere Namen für solche mehrlagigen Graphene sind unter anderem Graphit-(Nano)Plättchen, nanoskaliger Graphit und expandierte Graphitplättchen. Für die Herstellung von Graphen gibt es unterschiedliche Ansätze, zum Beispiel mechanische oder chemische Exfoliation von Graphit oder epitaktisches Wachstum auf Siliziumkarbid oder auf Übergangsmetallen.

Die eingesetzten Graphenplättchen können beispielsweise eine Dicke von ≤ 100 nm, vorzugsweise ≤ 10 nm und mehr bevorzugt ≤ 1 nm aufweisen. Jedes Graphenplättchen besitzt eine Länge und eine Breite parallel zur Graphitebene und eine Dicke senkrecht zur Graphitebene. Die größte Dimension wird hierbei als die Länge bezeichnet, die kleinste Dimension als die Dicke und die letzte Dimension als die Breite. Die Länge und die Breite der Graphenplättchen können beispielsweise in einem Bereich von ≥ 1 µm bis ≤ 20 µm liegen.

Im Rahmen der vorliegenden Erfindung werden unfunktionalisierte Kohlenstoffnanoröhren und Graphenplättchen eingesetzt.

Bevorzugte Ausführungsformen und weitere Aspekte der vorliegenden Erfindung werden nachfolgend geschildert. Sie können beliebig miteinander kombiniert werden, sofern sich aus dem Kontext nicht das Gegenteil ergibt.

In einer Ausführungsform der Dispersion liegt das Massenverhältnis von Kohlenstoffnanoröhren zu Graphenplättchen in einem Bereich von ≥ 20:80 bis ≤ 60:40. Weiter bevorzugt ist ein solches Massenverhältnis von ≥ 30:70 bis ≤ 50:50.

Erfindungsgemäß ist die Dispersion eine wässrige mit einem Wassergehalt der Dispersion in einem Bereich von ≥ 50 Gewichts-% bis ≤ 99,5 Gewichts-% und vorzugsweise von ≥ 80 Gewichts-% bis ≤ 99 Gewichts-%, bezogen auf das Gesamtgewicht der Dispersion, liegen. Es ist möglich, dass Ethylenglykol oder ein anderer Glykol als Additiv der wässrigen Dispersion hinzugefügt wird. Dieses ist insbesondere in der Anwendung für Tintenstrahl-Drucktinten vorteilhaft. Geeignete Gewichtsanteile des Glykols liegen beispielsweise im Bereich von ≥ 1 Gewichts-% bis ≤ 15 Gewichts-%, bezogen auf das Gesamtgewicht der Dispersion.

In einer weiteren Ausführungsform der Dispersion sind die Kohlenstoffnanoröhren einwandige und/oder mehrwandige mit einem durchschnittlichen äußeren Durchmesser von ≥ 3 nm bis ≤ 100 nm, vorzugsweise ≥ 5 nm bis ≤ 25 nm und einem Verhältnis von Länge zu Durchmesser von ≥ 5, vorzugsweise ≥ 100. Vorteilhaft an solchen Kohlenstoffnanoröhren ist insbesondere das hohe Aspektverhältnis. Es ist nicht ausgeschlossen, dass die einzelnen CNTs in höher aggregierter oder agglomerierter Form vorliegen.

In einer weiteren Ausführungsform der Dispersion liegen die Kohlenstoffnanoröhren in nicht-aggregierter Form vor und weisen eine mittlere Teilchengröße, ausgedrückt als d₉₀-Wert, von ≥ 0,5 µm bis ≤ 2 µm auf.

Der d₉₀-Wert der mittleren Teilchengröße kann mittels Laserbeugung (ein Beispiel für ein Gerät ist der Mastersizer MS 2000 mit Dispergiereinheit Hydro S der Firma Malvern; in Wasser) ermittelt werden. Vorzugsweise beträgt dieser Wert ≥ 0,75 µm bis ≤ 1,75 µm und mehr bevorzugt ≥ 1 µm bis ≤ 1,5 µm. Vorteilhaft an solch kleinen Teilchengrößen ist, dass in Tintenstrahl-Druckverfahren nicht der Druckkopf und in Siebdruckverfahren nicht das Sieb verstopft wird.

Die genannten Teilchengrößen lassen sich aus kommerziell erhältlichen CNT-Agglomeraten beispielsweise durch Mahlen, mittels eines Strahldispergators, eines Hochdruckhomogenisators oder mittels Ultraschall erhalten.

In einer weiteren Ausführungsform der Dispersion sind die Graphenplättchen ein- bis einhundertlagige Graphenplättchen. Vorzugsweise beträgt die Anzahl der Graphenlagen ≥ 10 bis ≤ 90, mehr bevorzugt ≥ 20 bis ≤ 60. Die Anzahl der Graphenlagen kann aus der spezifischen Oberfläche de Graphene abgeleitet werden.

In einer weiteren Ausführungsform der Dispersion beträgt der Gesamtgehalt an Kohlenstoffnanoröhren und Graphenplättchen ≥ 1 Gewichts-% bis ≤ 15 Gewichts-%. Bei höheren Anteilen könnte die Dispergierbarkeit unter Umständen nicht mehr gewährleistet sein und Düsen von Tintenstrahl-Druckköpfen könnten verstopfen. Vorzugsweise beträgt der Gehalt ≥ 1,5 Gewichts-% bis ≤ 8Gewichts-%, mehr bevorzugt ≥ 3 Gewichts-% bis ≤ 6 Gewichts-%.

In einer weiteren Ausführungsform der Dispersion umfasst diese weiterhin Additive, die ausgewählt sind aus der Gruppe umfassend Alkoxylate, Alkylolamide, Ester, Aminoxide, Alkylpolyglucoside, Alkylphenole, Arylalkylphenole, wasserlösliche Homopolymere, wasserlösliche statistische Copolymere, wasserlösliche Blockcopolymere, wasserlösliche Pfropfpolymere, Polyvinylalkohole, Copolymere aus Polyvinylalkoholen und Polyvinylacetaten, Polyvinylpyrrolidone, Cellulose, Stärke, Gelatine, Gelatinederivate, Aminosäurepolymere, Polylysin, Polyasparaginsäure, Polyacrylate, Polyethylensulfonate, Polystyrolsulfonate, Polymethacrylate, Kondensationsprodukte von aromatischen Sulfonsäuren mit Formaldehyd, Naphthalinsulfonate, Ligninsulfonate, Copolymerisate acrylischer Monomere, Polyethylenimine, Polyvinylamine, Polyallylamine, Poly(2-vinylpyridine), Block-Copolyether, Block-Copolyether mit Polystyrolblöcken und/oder Polydiallyldimethylammoniumchlorid.

Das Additiv (Dispergierhilfsmittel) ist besonders bevorzugt ausgewählt aus Polyvinylpyrrolidon, Block-Copolyether und Block-Copolyether mit Polystyrolblöcken. Ganz besonders bevorzugt werden Polyvinylpyrrolidon mit einer Molmasse von etwa 10000 g/mol (zum Beispiel PVP K15 der Firma Fluka) und Polyvinylpyrrolidon mit einer Molmasse von etwa 360000 g/mol (zum Beispiel PVP K90 der Firma Fluka sowie weiterhin Natrium Ligninsulfonat (LSSNa).

In einer weiteren Ausführungsform der Dispersion weist diese eine Viskosität bei 25 °C von ≥ 2 mPa s bis ≤ 100000 mPa s bei einer Scherrate von 1/s auf. Die Viskositäten lassen sich wie folgt bestimmen: ca. 3 ml der Dispersion werden in den Probenhalter eines Anton Paar MCR 301 Rotationsviskosimeters, das mit einer Doppelspaltgeometrie (DG 67) für niedrig viskose Medien ausgestaltet ist, gefüllt. Die Fließkurven werden zwischen 0.25 und 200 s⁻¹ aufgenommen. Die Messungen werden bei 25 °C durchgeführt.

Ein bevorzugter Bereich für die Viskosität der Dispersion ist ≥ 5 mPa s bis ≤ 20 mPa s bei einer Scherrate von 1/s. Dieser Bereich eignet sich besonders für Tintenstrahldruck-Tinten. Ein weiterer bevorzugter Bereich für die Viskosität der Dispersion ist ≥ 50 mPa s bis ≤ 150 mPa s bei einer Scherrate von 1/s. Dieser Bereich eignet sich besonders für Tinten im Gravur- und Flexodruck. Noch ein weiterer bevorzugter Bereich für die Viskosität der Dispersion ist ≥ 1000 mPa s bis ≤ 100000 mPa s bei einer Scherrate von 1/s. Dieser Bereich eignet sich besonders für Tinten für das Siebdrucken.

Ein weiterer Gegenstand der vorliegenden Erfindung ist ein Verfahren zur Herstellung einer erfindungsgemäßen Dispersion, umfassend den Schritt des Zusammenfügens von Kohlenstoffnanoröhren und Graphenplättchen, so dass in der Dispersion ein Massenverhältnis von Kohlenstoffnanoröhren zu Graphenplättchen in einem Bereich von ≥ 5:95 bis ≤ 75:25 vorliegt.

Selbstverständlich können die Massenverhältnisse auch in den zuvor geschilderten Bereichen von ≥ 20:80 bis ≤ 60:40 oder ≥ 30:70 bis ≤ 50:50 liegen und die Dispersion und ihre Komponenten können die im Zusammenhang mit der Dispersion geschilderten Eigenschaften aufweisen. Vorteilhafterweise werden die Kohlenstoffnanoröhren und die Graphenplättchen separat oder zusammen in einem wässrigen Medium dispergiert und die erhaltenen Dispersionen anschließend kombiniert. Der Schritt des Dispergierens kann unter Zuhilfenahme von Ultraschall und/oder Strahldispergatoren erfolgen.

Die Erfindung betrifft weiterhin die Verwendung einer erfindungsgemäßen Dispersion als Drucktinte zur Herstellung von elektrisch leitfähigen Filmen. Mit eingeschlossen in den Begriff "elektrisch leitfähiger Film" sind hierbei Leiterbahnen und elektrische Schaltkreise. Die erfindungsgemäße Dispersion kann vorteilhafterweise zur Herstellung von flexiblen, elektrisch leitfähigen Filmen oder Strukturen eingesetzt werden, die auch bei Dehnen oder Biegen des Substrats ihre Leitfähigkeit behalten und zudem eine gute Haftung auf einem Substrat, beispielsweise auf Polycarbonat, zeigen können.

Zur Formulierung der Drucktinte können Lösungsmittel, Filmbildner und weitere Additive hinzugefügt werden. Besonders bevorzugt wird ein Lösungsmittel ausgewählt aus der Gruppe umfassend C₁- bis C₅- Alkohole, insbesondere C₁- bis C₃- Alkohole, Ether (insbesondere Dioxolan), Ketone und/oder Glykole (insbesondere Diethylenglykol), verwendet.

Der Filmbildner ist bevorzugt ausgewählt aus Gruppe umfassend Polydimethylsiloxan, Polyacrylat, Ammoniumsalze von Polyacrylaten, Siloxane, Wachskombinationen, Copolymere mit pigmentaktiven Gruppen, niedermolekulare Polymere, Hydroxyethylcellulose und/oder Polyvinylalkohol und/oder aus der Gruppe der bereits oben im Zusammenhang mit einer weiteren Ausführungsform der Dispersion genannten Additive, welche als Dispergierhilfsmittel wirken. Hier sind das Dispergierhilfsmittel BYK 356 der Firma BYK-Chemie, Wesel (ein Polyacrylat) sowie BYK 154 derselben Firma, (das Ammoniumsalz eines Acrylatcopolymeren) besonders bevorzugt.

Die weiteren Additive sind bevorzugt ausgewählt aus der Gruppe umfassend Pigmente, Entschäumer, Lichtschutzmittel, optische Aufheller, Korrosionsinhibitoren, Antioxidantien, Algizide, Weichmacher, Verdicker und/oder oberflächenaktive Substanzen. Ganz besonders bevorzugt wird Pluronic PE10400 (der Firma BASF, Ludwigshafen), ein Triblock-Copolymer aus C₃-Polyether, C₂-Polyether, C₃-Polyethereinheiten mit ca. 40 Gewichts-% C₂-Polyether als Additiv eingesetzt.

Erfindungsgemäß denkbar ist der Einsatz der erfindungsgemäßen Dispersion im Flexodruck. Die Drucktinte kann weiterhin in einem Tintenstrahldruckverfahren eingesetzt werden. Geeignete Tintenstrahldruck-Prozesse umfassen beispielsweise thermisches Tintenstrahldrucken (thermal inkjet printing), piezoelektrisches Tintenstrahldrucken (piezoelectric inkjet printing) oder kontinuierliches und drop-on-demand Tintenstrahldrucken (continuous inkjet printing, DOD-inkjet printing) und Aerosoldrucker. Vorzugsweise wird beim Tintenstrahldrucken die Tropfenbildung in einem piezoelektrisch angetriebenen Druckkopf erreicht. Hierbei wird mit Hilfe des piezoelektrischen Effekts über die Wände der Tintendüse eine Schallwelle im Tintenvolumen der Druckdüse erzeugt, die an der Öffnung der Düse das Herausschleudern eines Tintentropfens in Richtung des Drucksubstrats verursacht. In Hinblick auf die thermische Stabilität der Funktionstinten liegt der Vorteil der Piezo-Köpfe im vergleichsweise milden Umgang mit den Tinten.

Noch ein Aspekt ist ein elektrisch leitfähiger Film, umfassend Kohlenstoffnanoröhren und Graphenplättchen, wobei das Massenverhältnis von Kohlenstoffnanoröhren zu Graphenplättchen in einem Bereich von ≥ 5:95 bis ≤ 75:25 liegt. Der Film kann durch Bedrucken eines Substrats mit der erfindungsgemäßen Dispersion oder Drucktinte, gefolgt vom Entfernen (vorzugsweise Verdampfen) der Dispersionsflüssigkeit, erhalten werden. Selbstverständlich können die Massenverhältnisse auch in den zuvor geschilderten Bereichen von ≥ 20:80 bis ≤ 60:40 oder ≥ 30:70 bis ≤ 50:50 liegen und die Dispersion und ihre Komponenten können die im Zusammenhang mit der Dispersion geschilderten Eigenschaften aufweisen.

In einer Ausführungsform des Films weist dieser eine spezifischen Leitfähigkeit von ≥ 7 kS/m auf. Bevorzugte Leitfähigkeiten liegen im Bereich von ≥ 7 kS/m bis ≤ 50 kS/m und mehr bevorzugt von ≥ 15 kS/m bis ≤ 30 kS/m. Die Leitfähigkeit lässt sich wie folgt ermitteln: erhaltene Filme werden mit 2 dünnen, jeweils 1 cm langen Streifen Silberleitlack in einem Abstand von 1 cm kontaktiert (so dass sich annähernd ein Quadrat bildet). Anschließend erfolgt die Trocknung des Leitlacks (60 °C für mindestens 15 min). Die Messung der Schichtwiderstände erfolgt durch Kontaktierung der beiden Leitlackstreifen mit einem Multimeter (zum Beispiel Keithley 2100). Die Dicke der Schichten werden mit einem Profilometer (zum Beispiel von Dektak) bestimmt.

In einer weiteren Ausführungsform des Films liegt dieser als elektrische Leiterbahn auf einem Substrat vor. Solche Leiterbahnen können auch in Form oder als Bestandteil beispielsweise von Antennenelementen (wie für RFID-Geräte), Sensorelementen, lichtemittierenden Dioden, Photovoltaik-Zellen, Bildschirm-Tastfelder (touch panels) oder Dünnschichttransistoren (TFTs) verwendet werden.

Die vorliegende Erfindung wird anhand der nachfolgenden Beispiele näher erläutert.

### Materialien:

Natrium Ligninsulfonat (LSSNa) 12 kDa: CAS Nr. 68512-34-5.

Graphen: GrapheneX-GR0710 bezogen von Geo-Tech Polymers (Cielo Holdings). Diese Graphene besitzen eine spezifische Oberfläche von durchschnittlich 48 m²/g und daraus abgeleitet durchschnittliche 54 Lagen. Der d₉₀-Wert strahldispergierter Proben beträgt ca. 8 µm.

### Herstellung der Graphen-Dispersion:

0,46 g LSSNa 12 kDa wurden mit 28,05 g Wasser versetzt und unter Rühren in einer 100 ml Glasflasche gelöst. Anschließend wurden 0,56 g Graphene in einer weiteren Glasflasche eingewogen. Zu der wässrigen Polymerlösung wurden in 4 Portionen unter Ultraschall 4 x 3 min (1 min on, 20 s Pause) mit 40% Amplitude unter Kühlung mit Eis die Graphene eindispergiert. Zum Ende wurde nochmals der gesamte Dispersion 15 min (1 min on, 20 s Pause) Ultraschall mit einer Amplitude von 40% ausgesetzt.

### Herstellung der CNT-Dispersion:

5 g CNTs wurden mit 4 g LSSNa in 100 ml Wa sser vermischt und mittels Strahldispergator 10 x 1000 bar behandelt. Der d₉₀-Wert der so behandelten CNTs betrug 1,25 µm. Die 5 % CNT-Dispersion wurde mit Wasser auf eine 2 Gewichts-%-Dispersion verdünnt.

### Herstellung der Mischungen:

Die Graphen-Dispersion wurde mit der CNT-Dispersion in unterschiedlichen Verhältnissen mittels Magnetrührer vermischt und anschließend die spezifische Leitfähigkeit bestimmt. Bedingt durch die Zubereitung betrug der Gesamtgehalt an Graphen und CNTs immer 2 Gewichts-%, selbst wenn die relativen Anteile von Graphen und CNT jeweils variiert wurden.

### Bestimmung der elektrischen Leitfähigkeit:

Die Paste aus CNT und Graphenen wurde zwischen zwei Klebefilmstreifen, die in einem Abstand von 2 mm auf das Substrat geklebt wurden, aufgetragen und bei 50 °C getrocknet. Anschließend wurde der Widerstand in einem Abstand von 10 mm auf der Linie gemessen, die Dicke der Linie bestimmt und die spezifische Leitfähigkeit aus den Daten berechnet.

Es wurden die folgenden Ergebnisse erhalten:

| Massenverhältnis CNT:Graphen | Spezifische Leitfähigkeit [kS/m] | Standardabweichung [S/m] |
|---|---|---|
| ausschließlich Graphene (Vergleichsbeispiel) | 5,870 | 475 |
| 5:95 | 9,734 | 526 |
| 10:90 | 11,854 | 229 |
| 20:80 | 14,569 | 1104 |
| 30:70 | 21,716 | 1382 |
| 50:50 | 12,929 | 2164 |
| 75:25 | 11,308 | 2330 |
| ausschließlich CNTs (Vergleichsbeispiel) | 2,205 | 403 |

Alle erfindungsgemäßen Mischungen besaßen nach dem Trocknen eine höhere spezifische Leitfähigkeit als die reinen Komponenten CNT beziehungsweise Graphen. Man erkennt ein deutliches Maximum in der spezifischen Leitfähigkeit bei einem Massenverhältnis CNT:Graphen von circa 30:70, das mit etwa 22 kS/m rund viermal höher als der Leitwert für reines Graphen und rund zehnmal höher als für reines CNT liegt.

## Patentansprüche

1. Dispersion, umfassend Kohlenstoffnanoröhren und Graphenplättchen, wobei das Massenverhältnis von Kohlenstoffnanoröhren zu Graphenplättchen in einem Bereich von ≥ 5:95 bis ≤ 75:25 liegt **dadurch gekennzeichnet, dass** die Kohlenstoffnanoröhren und Graphenplättchen unfunktionalisiert sind und die Dispersion einen Wassergehalt in einem Bereich von ≥ 50 bis ≤ 99,5 Gew.-% aufweist.

2. Dispersion gemäß Anspruch 1, wobei das Massenverhältnis von Kohlenstoffnanoröhren zu Graphenplättchen in einem Bereich von ≥ 20:80 bis ≤ 60:40 liegt.

3. Dispersion gemäß Anspruch 1, wobei die Kohlenstoffnanoröhren einwandige und/oder mehrwandige Kohlenstoffnanoröhren mit einem durchschnittlichen äußeren Durchmesser von ≥ 3 nm bis ≤ 100 nm und einem Verhältnis von Länge zu Durchmesser von ≥ 5 sind.

4. Dispersion gemäß Anspruch 1, wobei die Kohlenstoffnanoröhren in nicht-aggregierter Form vorliegen und eine mittlere Teilchengröße, ausgedrückt als d₉₀-Wert, von ≥ 0,5 µm bis ≤ 2 µm aufweisen.

5. Dispersion gemäß Anspruch 1, wobei die Graphenplättchen ein- bis einhundertlagige Graphenplättchen sind.

6. Dispersion gemäß Anspruch 1, wobei der Gesamtgehalt an Kohlenstoffnanoröhren und Graphenplättchen ≥ 1 Gewichts-% bis ≤ 15 Gewichts-% beträgt.

7. Dispersion gemäß Anspruch 1, weiterhin umfassend Additive, die ausgewählt sind aus der Gruppe umfassend Alkoxylate, Alkylolamide, Ester, Aminoxide, Alkylpolyglucoside, Alkylphenole, Arylalkylphenole, wasserlösliche Homopolymere, wasserlösliche statistische Copolymere, wasserlösliche Blockcopolymere, wasserlösliche Pfropfpolymere, Polyvinylalkohole, Copolymere aus Polyvinylalkoholen und Polyvinylacetaten, Polyvinylpyrrolidone, Cellulose, Stärke, Gelatine, Gelatinederivate, Aminosäurepolymere, Polylysin, Polyasparaginsäure, Polyacrylate, Polyethylensulfonate, Polystyrolsulfonate, Polymethacrylate, Kondensationsprodukte von aromatischen Sulfonsäuren mit Formaldehyd, Naphthalinsulfonate, Ligninsulfonate, Copolymerisate acrylischer Monomere, Polyethylenimine, Polyvinylamine, Polyallylamine, Poly(2-vinylpyridine), Block-Copolyether, Block-Copolyether mit Polystyrolblöcken und/oder Polydiallyldimethylammoniumchlorid.

8. Verfahren zur Herstellung einer Dispersion gemäß einem oder mehreren der Ansprüche 1 bis 7, umfassend den Schritt des Zusammenfügens von Kohlenstoffnanoröhren und Graphenplättchen, so dass in der Dispersion ein Massenverhältnis von Kohlenstoffnanoröhren zu Graphenplättchen in einem Bereich von ≥ 5:95 bis ≤ 75:25 vorliegt.

9. Verwendung einer Dispersion gemäß einem oder mehreren der Ansprüche 1 bis 7 als Drucktinte zur Herstellung von elektrisch leitfähigen Filmen.

## Claims

1. A dispersion comprising carbon nanotubes and graphene platelets, wherein the mass ratio of carbon nanotubes to graphene platelets is in a range from ≥ 5:95 to ≤ 75:25, **characterized in that** the carbon nanotubes and graphene platelets are non-functionalized and the dispersion has a water content in a range from ≥ 50 to ≤ 99.5 % by weight.

2. The dispersion according to claim 1, wherein the mass ratio of carbon nanotubes to graphene platelets is in a range from ≥ 20:80 to ≤ 60:40.

3. The dispersion according to claim 1, wherein the carbon nanotubes are single-walled and/or multi-walled carbon nanotubes having an average outer diameter of from ≥ 3 nm to ≤ 100 nm and a ratio of length to diameter of ≥ 5.

4. The dispersion according to claim 1, wherein the carbon nanotubes are in a non-aggregated form and have a median particle size, expressed as d₉₀-value, of ≥ 0.5 µm to ≤ 2 µm.

5. The dispersion according to claim 1, wherein the graphene platelets are one- to 100-layer graphene platelets.

6. The dispersion according to claim 1, wherein the total content of carbon nanotubes and graphene platelets is ≥ 1 % by weight to ≤ 15 % by weight.

7. The dispersion according to claim 1 further comprising additives selected from the group comprising alkoxylates, alkylolamides, esters, amine oxides, alkyl polyglucosides, alkylphenols, arylalkylphenols, water-soluble homopolymers, water-soluble statistic copolymers, water-soluble block copolymers, water-soluble graft polymers, polyvinyl alcohols, copolymers of polyvinyl alcohols and polyvinylacetates, polyvinylpyrrolidones, cellulose, starch, gelatin, gelatin derivatives, amino acid polymers, polylysine, poly aspartic acid, polyacrylates, polyethylene sulfonates, polystyrene sulfonates, polymethacrylates, condensation products of aromatic sulfonic acids with formaldehyde, naphthalenesulfonates, ligninsulfonates, copolymers of acrylic monomers, polyethylene imines, polyvinylamines, polyallylamines, poly(2-vinylpyridines), block copolyethers, block copolyethers with polystyrene blocks and/or polydiallyldimethylammonium chloride.

8. A method for the preparation of a dispersion according to one or more of claims 1 to 7, comprising the step of merging carbon nanotubes and graphene platelets in a manner such that a mass ratio of carbon nanotubes to graphene platelets in the dispersion is in a range from ≥ 5:95 to ≤ 75:25.

9. Use of a dispersion according to one or more of claims 1 to 7 as printing ink for the preparation of electrically conductive films.

## Revendications

1. Dispersion comprenant des nanotubes de carbone et des feuillets de graphène, le rapport massique des nanotubes de carbone aux feuillets de graphène étant compris dans la plage de ≥ 5:95 à ≤ 75:25, **caractérisée en ce que** les nanotubes de carbone et les feuillets de graphène sont non fonctionnalisés, et **en ce que** la dispersion présente une teneur en eau comprise dans la plage de ≥ 50 à ≤ 99,5 % en poids.

2. Dispersion selon la revendication 1, dans laquelle le rapport massique des nanotubes de carbone aux feuillets de graphène est compris dans la plage de ≥ 20:80 à ≤ 60:40.

3. Dispersion selon la revendication 1, dans laquelle les nanotubes de carbone sont des nanotubes de carbone monoparois et/ou multiparois ayant un diamètre extérieur moyen de ≥ 3 nm à ≤ 100 nm et un rapport de leur longueur à leur diamètre ≥ 5.

4. Dispersion selon la revendication 1, dans laquelle les nanotubes de carbone se présentent sous forme non agrégée et présentent une granulométrie moyenne, exprimée par la valeur d₉₀, de ≥ 0,5 µm à ≤ 2 µm.

5. Dispersion selon la revendication 1, dans laquelle les feuillets de graphène sont des feuillets de graphène constitués de une à cent couches.

6. Dispersion selon la revendication 1, dans laquelle la teneur totale en nanotubes de carbone et feuillets de graphène représente ≥ 1 % en poids à ≤ 15 % en poids.

7. Dispersion selon la revendication 1, comprenant en outre des additifs qui sont choisis dans le groupe comprenant les alcoxylates, les alkylolamides, les esters, les oxydes d'amine, les alkylpolyglycosides, les alkylphénols, les arylalkylphénols, les homopolymères solubles dans l'eau, les copolymères statistiques solubles dans l'eau, les copolymères à blocs solubles dans l'eau, les polymères greffés solubles dans l'eau, les poly(alcools vinyliques), les copolymères de poly(alcools vinyliques) et de poly(acétates de vinyle), les polyvinylpyrrolidones, la cellulose, l'amidon, la gélatine, les dérivés de la gélatine, les polymères d'acides aminés, la polylysine, le poly(acide asparagique), les polyacrylates, les polyéthylènesulfonates, les polystyrènesulfonates, les polyméthacrylates, les produits de condensation d'acides sulfoniques aromatiques et de formaldéhyde, les naphtalènesulfonates, les ligninesulfonates, les copolymères de monomères acryliques, les polyéthylène-imines, les polyvinylamines, les polyallylamines, les poly(2-vinylpyridines), les copolyéthers à blocs, les copolyéthers à blocs ayant des blocs polystyrène et/ou le poly(chlorure de diallyldiméthylammonium).

8. Procédé de fabrication d'une dispersion selon l'une ou plusieurs des revendications 1 à 7, comprenant l'étape de réunion de nanotubes de carbone et de feuillets de graphène de façon que la dispersion présente un rapport massique des nanotubes de carbone aux feuillets de graphène compris dans la plage de ≥ 5:95 à ≤ 75:25.

9. Utilisation d'une dispersion selon l'une ou plusieurs des revendications 1 à 7 en tant qu'encre d'imprimerie pour la fabrication de films conducteurs de l'électricité.
